# EUROPÄISCHE PATENTSCHRIFT

(11) **EP 2 218 531 B1**
(45) Veröffentlichungstag und Bekanntmachung des Hinweises auf die Patenterteilung: **05.12.2012**
(21) Anmeldenummer: 09001874.8
(22) Anmeldetag: 11.02.2009
(51) Int. Cl.: B23B 31/28, B23B 31/16

(54) **Spanneinrichtung für Werkzeugmaschinen**
Clamping device for machine tools
Dispositif de tension pour machines-outils

(43) Veröffentlichungstag der Anmeldung: 18.08.2010
(73) Patentinhaber: Hiestand, Karl, 88630 Pfullendorf (DE)
(72) Erfinder: Hiestand, Karl, 88630 Pfullendorf (DE)
(74) Vertreter: Engelhardt, Guido

(56) Entgegenhaltungen:
- EP-A- 1 114 685
- DE-A1-102006 050 918

## Beschreibung

Die Erfindung bezieht sich auf eine Spanneinrichtung für Werkzeugmaschinen, die mit einem kraftbetätigten Spannfutter zur Halterung eines Werkstückes versehen und dessen Spannbacken mittels der Spanneinrichtung über eine axial verstellbare Zugstange betätigbar sind, wobei die Spanneinrichtung einen umschaltbaren Stellmotor, einem zwischen diesem und der Zugstange angeordneten Antriebsstrang sowie eine trieblich mit dem Stellmotor gekoppelte, vorzugsweise auf einer mit der Maschinenspindel verbundenen Hohlwelle drehbar gelagerte Glocke aufweist.

Durch die DE 10 2006 050 918 A1 ist ein Elektrospanner dieser Art bekannt. Der Stellmotor ist bei dieser Ausgestaltung über einen Zahnriementrieb mit einem Antriebsrad eines Harmonik-Drive-Getriebes gekoppelt, das über einen Gewinderolltrieb mit der Zugstange trieblich verbunden ist. Durch das Harmonik-Drive -Getriebe wird hierbei das von dem Stellmotor zu erzeugende kleine Drehmoment bei hohen Drehzahlen aufgrund der Übersetzung in niedere Drehzahlen und ein hohes Drehmoment umgewandelt.

Abgesehen von dem erheblichen, durch das Harmonik-Drive-Getriebe bedingten Bauaufwand ist es notwendig, während eines Arbeitsvorganges, veranlasst durch die unmittelbare Koppelung des Antriebsrades des Harmonik-Drive-Getriebes mit dem Stellmotor, dass dieser stets eine konforme Drehrichtung und auch eine exakte Drehzahl in bezug auf die Maschinenspindel aufweist, um eine konstante Zug- bzw. Druckkraft über die Zugstange auf die Spannbacken ausüben zu können. Dies wiederum bedingt eine externe und sehr aufwendige elektronische Maschinensteuerung und -überwachung. Bei einer Rechtsdrehung der Maschinenspindel muss nämlich der Stellmotor etwas schneller als diese umlaufen. Bei einer Linksdrehung dagegen etwas langsamer, um das entsprechende Drehmoment auf das Antriebsrad des Harmonik-Drive-Getriebes zu übertragen. Diese Anforderungen, auch hinsichtlich der Wartung, sind sehr kostenintensiv, auch ist die Inbetriebnahme und die Montage der bekannten Spanneinrichtung sehr aufwendig. Des Weiteren ist von Nachteil, dass bei einer sekundenschnellen Drehrichtungsumkehrung das Trägheitsmoment des Stellmotors bei Aufrechterhaltung des Drehmomentes nur sehr schwierig zu beherrschen ist. Ferner ist beim Versagen der Steuerung oder bei einem Stromausfall eine Betriebssicherung nicht gegeben, so dass der Einsatzbereich dieser Spanneinrichtung sehr begrenzt ist.

Aufgabe der Erfindung ist es daher, eine Spanneinrichtung für Werkzeugmaschinen der vorgenannten Gattung in der Weise auszubilden, dass der Stator des Stellmotors ortsfest angeordnet werden kann und dass dessen Rotor bei einem eingespannten Werkstück stillgesetzt ist, Drehmassen demnach nicht gegeben sind, das erforderliche Drehmoment für die von der Zugstange auszuübende Axialkraft aber permanent ansteht. Außerdem soll der Stellmotor die gewählte Spannkraft auch bei Ausfall der elektrischen Energie konstant aufrecht erhalten, so dass die Spanneinrichtung selbsttätig gesichert ist. Um dies zu bewerkstelligen soll keine aufwendige Drehzahl- und Drehrichtungssteuerung benötigt werden. Trotz geringem Bauaufwand soll dennoch stets eine hohe Betriebssicherheit gewährleistet sein.

Gemäß der Erfindung wird dies bei einer Spanneinrichtung für Werkzeugmaschinen der eingangs genannten Art dadurch erreicht, dass der Antriebsstrang als zweiteiliger Getriebezug ausgebildet ist, dessen erster Teil in einem Gehäuse angeordnet ist, das fest mit der Rotorwelle des Stellmotors verbunden ist, dass das Eingangsglied und das Ausgangsglied des ersten Getriebezuges über den zweiten Getriebezug an die Glocke bzw. an die Maschinenspindel angeschlossen sind, und dass zur axialen Verstellung der Zugstange mittels des ersten Getriebezuges des Antriebsstranges bei Verdrehungen des Gehäuses Relativdrehungen gegenüber den Eingangsdrehrichtungen zwischen dem Eingangsglied und dem Ausgangsglied erzeugbar sind.

Sehr zweckmäßig ist es hierbei, die beiden Getriebezüge des Antriebsstranges wechselseitig als Untersetzungsgetriebe bzw. als Übersetzungsgetriebe auszulegen und die Übersetzungsstufen der beiden Getriebezüge des Antriebsstranges durch einen Zahnriementrieb, einen Keilriementrieb oder durch Zahnradstufen zu bilden.

Der Stellmotor kann als Elektromotor, vorzugsweise als Bremsankermotor, oder als Hydraulikmotor ausgebildet sein u. dessen Stillstandsdrehmoment sollte unmittelbar auf das Gehäuse des 1. Getriebezuges einwirken. Außerdem sollte die Glocke über einen Getriebetrieb oder einen Rollenwälztrieb unmittelbar oder über Zwischenglieder mit der Zugstange gekoppelt sein, wobei zur Erzeugung hoher Spannkräfte die Glocke über ein Untersetzungsgetriebe mit dem Abtriebsglied des zweiten Getriebezuges trieblich verbunden sein sollte.

Vorteilhaft ist es ferner, die Spanneinrichtung mit einer Sicherheitseinrichtung zu versehen, mittels der der Antriebsstrang selbsttätig verriegelbar ist.

Die Sicherheitseinrichtung kann hierbei aus an einem von zwei relativ zueinander verdrehbaren Bauteilen der Spanneinrichtung angeordneten, entgegen der Kraft einer Feder durch einen Elektromagneten gehaltenen Sicherungsbolzen gebildet sein, der bei Ausfall der elektrischen Energie in eine an dem anderen Bauteil vorgesehene Ausnehmung selbsttätig einrastet.

Des Weiteren sollte die Spanneinrichtung mit einer Sicherungssteuerung ausgestaltet werden, mittels der in zeitlich wählbaren Abständen die Festigkeit einzelner oder aller Bauteile der Spanneinrichtung, insbesondere der Getriebezüge, durch kurzzeitige Überlastung überprüfbar ist.

Wird eine Spanneinrichtung für Werkzeugmaschinen gemäß der Erfindung ausgebildet, so ist es möglich, die zum Öffnen und Schließen des Spannfutters erforderlichen axialen Verstellbewegungen der Zugstange durch geringfügige Verdrehungen des Stellmotors und des ersten Getriebezuges bzw. des diesen aufnehmenden Gehäuse zu erzeugen und auf einfache Weise über den zweiten Getriebezug, unmittelbar oder über weitere Getriebeglieder auf die Zugstange zu übertragen. Durch die Unter- oder Übersetzung des ersten Getriebezuges wird die Relativverdrehung bewerkstelligt.

Des Weiteren ist von großem Vorteil, dass bei einem eingespannten Werkstück ein Stillstandsdrehmoment des Stellmotors, das je nach der gewünschten bzw. erforderlichen Spannkraft einstellbar und über den zweiten Getriebezug übertragbar ist, auf das Spannfutter einwirkt. Ein vielseitiger Einsatz der vorschlagsgemäß ausgebildeten Spanneinrichtung ist demnach, trotz des geringen Bauaufwandes, gegeben.

Der Stellmotor der Spanneinrichtung, insbesondere wenn dieser als Bremsankermotor ausgebildet ist, stellt eine Sicherheitseinrichtung dar, durch die bei Ausfall der elektrischen Energie die Spannkraft selbsttätig aufrecht erhalten bleibt, es kann aber zusätzlich eine Sicherheitseinrichtung zur Verriegelung des Antriebsstranges vorgesehen werden. Auch kann die Spanneinrichtung mit einer Sicherheitssteuerung ausgestattet werden, um in zeitlich wählbaren Abständen die Bauteile der Spanneinrichtung durch Überlastung auf einfache Weise überprüfen zu können. Es ist demnach ein Elektrospanner geschaffen, mittels dessen Stellmotor die Spannkraft wählbar und zu sichern ist und der nur beim Öffnen und Schließen des Spannfutters geringfügig in jeweils einer Drehrichtung kurzzeitig umläuft. Eine hohe Betriebssicherheit und eine lange Lebensdauer sind demnach stets gewährleistet.

In der Zeichnung sind ein Ausführungsbeispiel sowie Ausführungsvarianten der gemäß der Erfindung ausgebildeten Spanneinrichtung dargestellt und nachfolgend im Einzelnen erläutert. Hierbei zeigen:
- Figur 1: die Spanneinrichtung im Ruhezustand, in einem Axialschnitt,
- Figur 2: die Spanneinrichtung nach Figur 1 mit einem eingespannten Werkstück,

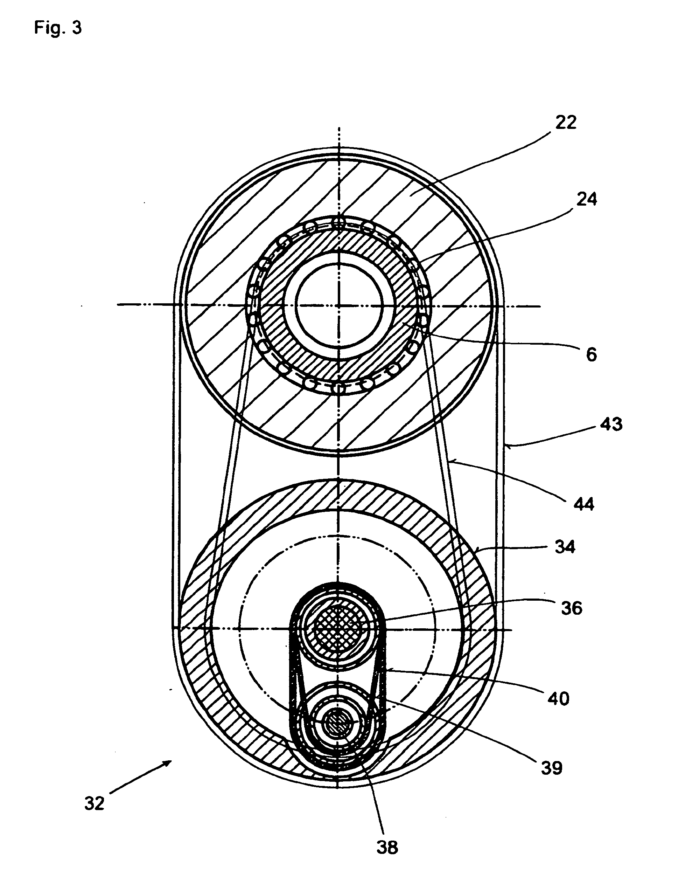

- Figur 3: einen Schnitt nach der Linie III-III der Figur 2,
- Figur 4: die Spanneinrichtung nach Figur 1 mit einem zusätzlichen Untersetzungsgetriebe,

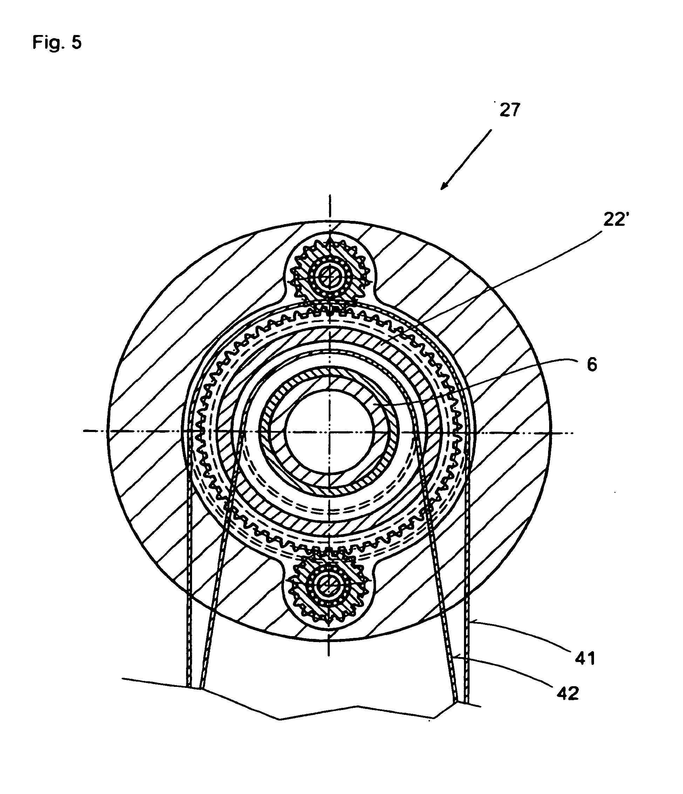

- Figur 5: einen Schnitt nach der Linie V-V der Figur 4 und
- Figur 6: die Spanneinrichtung nach Figur 4 mit andersartiger Ausgestaltung einzelner Bauteile und zusätzlicher Sicherheitseinrichtungen.

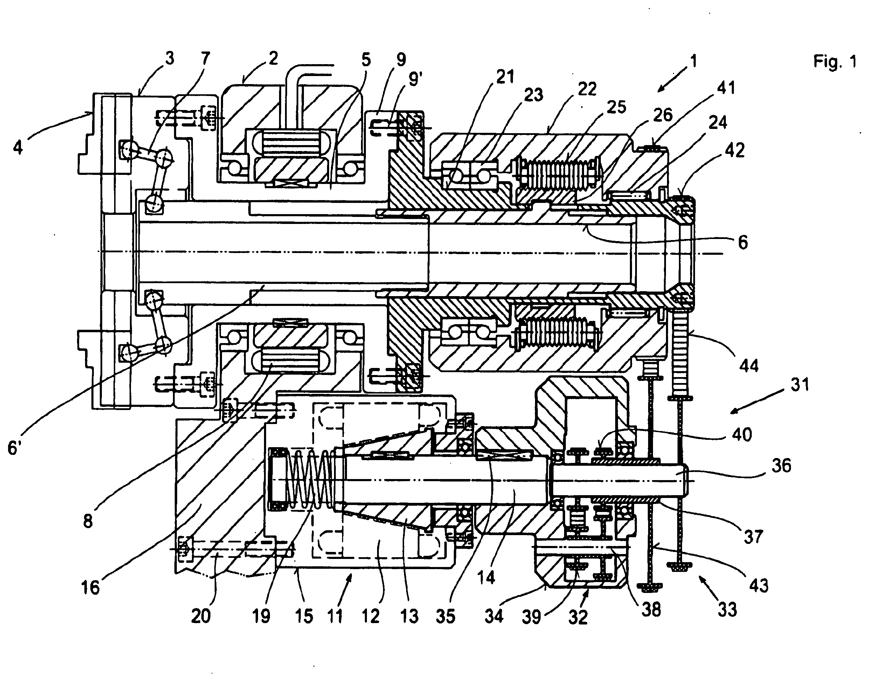

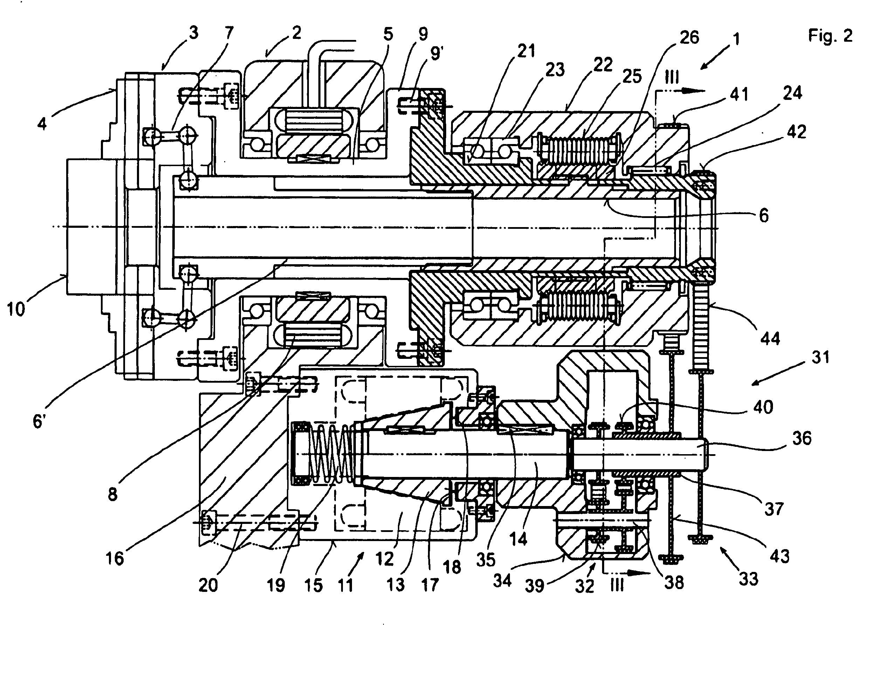

Die in den Figuren 1 und 2 dargestellte und mit 1 bezeichnete Spanneinrichtung dient zur Betätigung eines auf einer Werkzeugmaschine 2 angeordneten Kraftspannfutters 3, mittels dessen radial verstellbarer Spannbacken 4 ein zu bearbeitendes Werkstück 10 in dem Kraftspannfutter 3 einspannbar ist. Die Spannbacken 4 des Kraftspannfutters 3 sind hierbei über Umlenkhebel 7 durch eine axial bewegbare Zugstange 6 betätigbar, die mit einem umschaltbaren elektrischen Stellmotor 11 über einen Antriebsstrang 31 und eine Glocke 22 in Triebverbindung steht. Die Glocke 22 ist bei dieser Ausgestaltung mittels Wälzlager 23 und 24 drehbar auf einer Hohlwelle 21 gelagert, die durch Schraube 9 fest mit einer durch einen Elektromotor 8 antreibbaren Maschinenspindel 5 verbunden ist.

Der Stellmotor 11 der Spanneinrichtung 11.1 ist bei dem Ausführungsbeispiel nach den Fig. 1 und 2 als Bremsankermotor ausgebildet, dessen Starter 12 fest in einem Gehäuse 15 angeordnet ist, das mittels Schrauben 20 an einem Spindelstock 16 der Werkzeugmaschine 2 gehalten ist. Der Rotor 13 des Stellmotors 11 ist dagegen mit einer Rotorwelle14 versehen, auf der über einen Keil 35 drehfest ein Gehäuse 34 aufgesetzt ist. Der Rotor 13 ist des Weiteren mit einer Bremsscheibe 18 sowie einer Druckfeder 19 ausgestattet, die mit einer an dem Gehäuse 15 angebrachten Kupplungsscheibe 17 zusammenwirken. Bei Ausfall der Zufuhr von elektrischer Energie zu dem Stellmotor 11 wird durch die Kraft der Feder 19 sofort der Rotor 13 mit der Bremsscheibe 18 gegen die über das Gehäuse 15 mit dem ortsfesten Spindelstock 16 verbundenen Kupplungsscheibe 19 gedrückt, so dass die Rotorwelle 14 blockiert ist.

Der zwischen dem Stellmotor 11 und der Glocke 22 vorgesehene Antriebsstrang 31 ist als zweiteiliger Getriebezug 32 und 33 ausgebildet, dessen erster Teil 32 in einem Gehäuse 34 eingebaut ist, das über einen Keil 35 fest mit der Rotorwelle 14 des Stellmotors 11 verbunden ist. Die Antriebsenergie des Stellmotors 11 kann somit auf das Gehäuse 34 und über dieses auf den ersten Getriebezug 32 übertragen werden.

Der erste Getriebezug weist ein als Welle ausgebildetes Eingangsglied 36 auf, das mit einem auf der angetriebenen Hohlwelle 21 angeordneten Ausgangsglied 42 über eine Übersetzungsstufe 44 des zweiten Getriebezuges 33 mit dieser trieblich verbunden ist. Das Ausgangsglied 37 des ersten Getriebezuges 32 ist dagegen über eine Übersetzungsstufe 43 mit einem auf der Glocke 22 angebrachten Eingangsglied 41 und mit dieser gekoppelt. Der erste Getriebezug 32 des Antriebsgliedes 31 ist dadurch durch die Maschinenspindel 5 antreibbar; auch kann über diesen die Zugstange 6 beeinflusst werden.

Die beiden Übersetzungsstufen 39 und 40 des ersten Getriebezuges 32 sind durch Zahnriementriebe gebildet, deren zentrale Zahnriemenscheiben auf dem Eingangsglied 36 bzw. dem Ausgangsglied 37 drehfest angeordnet sind. Die jeweils zugehörigen Zahnriemenscheiben sind dagegen drehbar auf einer Welle 38 gelagert, die in dem Gehäuse 34 abgestützt ist. Wird das Gehäuse 34 durch die Rotorwelle 14 des Stellmotors 11 angetrieben, wird die Welle 38 um das Eingangsglied 36 gedreht, und es wird in dem ersten Getriebezug 32 eine Relativdrehung der ersten Übersetzungsstufe 39 gegenüber der zweiten Übersetzungsstufe 40 je nach der gewählten Übersetzung erzeugt.

Sowohl die Übersetzungsstufen 39 und 40 des ersten Getriebezuges 32, wie auch die Übersetzungsstufen 42 und 43 des zweiten Getriebezuges 33 können, wie dies in den Fig. 1 und 2 dargestellt ist, als Zahnriementriebe oder als Keilriementriebe ausgebildet sein. Es ist aber auch möglich, diese Übersetzungsstufen als Zahnradstufen auszulegen. Auch sind die Übersetzungen je nach Einsatzbereich der Spanneinrichtung 1 wählbar.

In den Fig. 1 und 2 ist die Spanneinrichtung 1 in unterschiedlichen Betriebsstellungen dargestellt. Fig. 1 zeigt die Spanneinrichtung 1 vor Beginn eines Spannvorganges, d.h. das Spannfutter 3 ist geöffnet, der Stellmotor 11 ist stromlos, so dass dessen Kupplungsscheibe 17 an der Bremsscheibe 18 anliegt und alle Bauteile stillgesetzt sind. Gemäß der Darstellung in Fig. 2 ist zwischen den Spannbacken 4 des Kraftspannfutters 3 ein Werkstück 10 eingespannt.

Soll in dem in Fig. 1 dargestellten offenen Kraftspannfutter 3 der Spanneinrichtung 1 gemäß Fig. 2 ein Werkstück 10 eingespannt werden, so sind die Spannbacken 4 radial nach innen zu verschieben. Dazu ist die Zugstange 6, die über ein Zwischenglied 6' mit den Umlenkhebeln 7 in Triebverbindung steht, nach rechts zu bewegen. Um dies bewerkstelligen zu können, ist mittels des Antriebsstranges 31 eine Relativverdrehung zwischen der angetriebenen Maschinenspindel 5 und der Glocke 22 zu erzeugen, so dass durch die Glocke 22, die über einen Getriebetrieb und einen Mitnehmer 26 mit der Zugstange 6 gekoppelt ist, diese entsprechend axial zu verschieben. Dem Stellmotor 11 ist dazu spannungsgeregelt elektrische Energie zuzuführen. Das mit der Rotorwelle 14 verbundene Gehäuse 34 wird dadurch verdreht, so dass durch die Übersetzungsstufen 39 bzw. 40 des ersten Getriebezuges 32 oder des zweiten Getriebezuges 33, je nach Auslegung, eine Drehzahldifferenz zwischen dem Eingangsglied 36 und dem Ausgangsglied 42 entsteht. Über die Übersetzungsstufe 43 des zweiten Getriebezuges 33 wird die Differenzdrehzahl gegenüber der Hohlwelle 21 auf die Glocke 22 geleitet. Die Zugstange 6 wird somit axial nach rechts verschoben. Zum Öffnen des Spannfutters 3 ist der Stellmotor 11 umzusteuern, so dass die Zugstange 6 nach links bewegt wird.

Um das Werkstück 10 in dem Spannfutter 3 in Spannstellung zu halten, ist in Betriebsstellung eine entsprechendes Drehmoment des Stellmotors 11 einzuleiten, das je nach der erforderlichen Spannkraft zu wählen ist. Da dieses Moment mittels eines Spannungsreglers auf einfache Weise geändert werden kann, ist ebenso die Spannkraft des Spannfutters 2 an den jeweiligen Einsatzzweck problemlos anzupassen. Auch können die beiden Getriebezüge 32 und 33 des Antriebsstranges 31 wechselseitig als Untersetzungs- bzw. als Übersetzungsgetriebe ausgelegt werden.

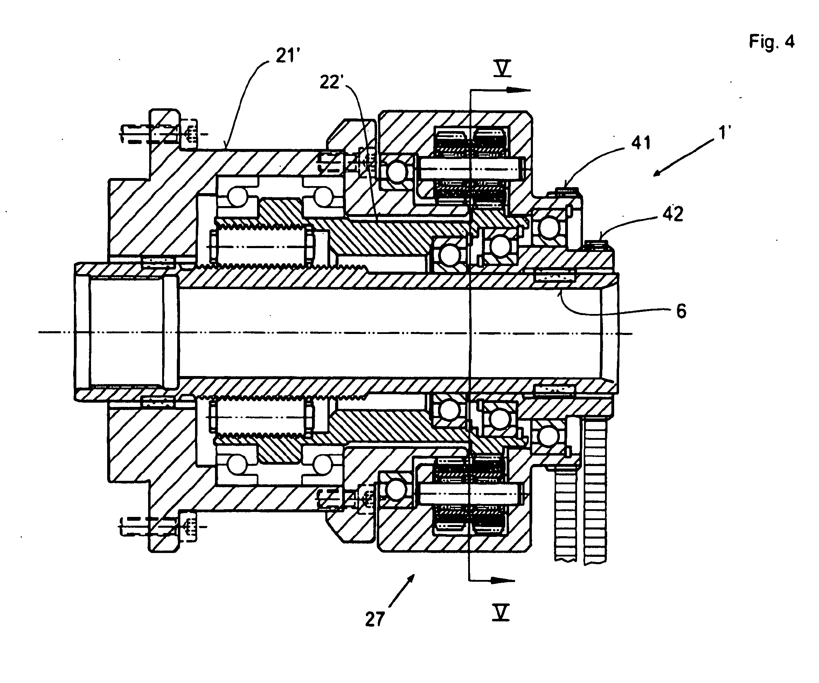

Bei der Ausgestaltung nach Fig. 4 ist der Glocke 22' ein Untersetzungsgetriebe 27 vorgeschaltet, so dass bei einer Relativverdrehung zwischen der Hohlwelle 21' und der Zugstange 6 diese jeweils nur geringfügig verstellt wird und demnach besonders hohe Spannkräfte zu erzeugen sind. Das als Planetenradgeriebe ausgebildete Untersetzungsgetriebe 27 ist hierbei mit der Maschinenspindel 5 und dem Eingangsglied 41 der zweiten Getriebestufe trieblich verbunden, außerdem mit der Hohlwelle 22'.

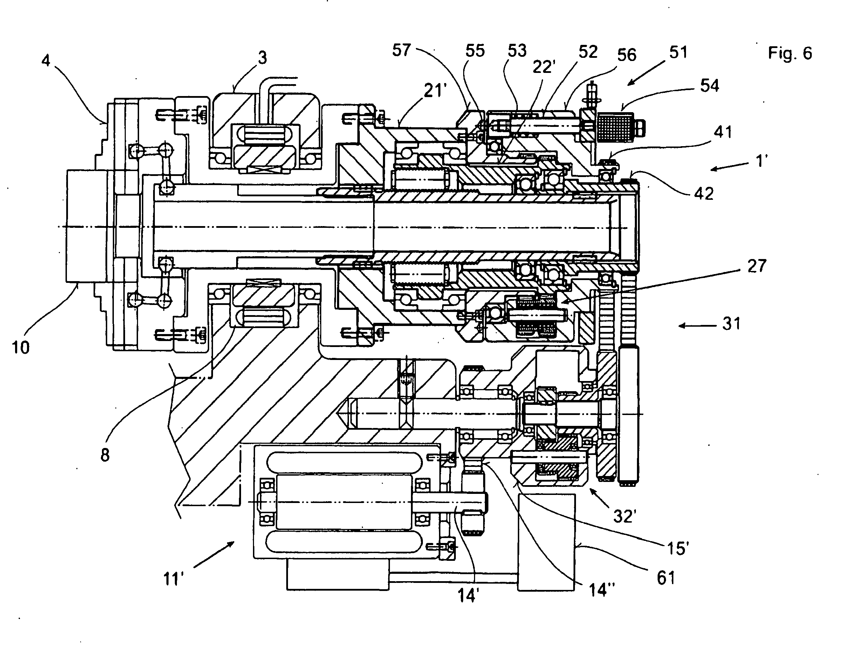

Gemäß Figur 6 ist die Spanneinrichtung 1' zusätzlich mit einer Sicherungseinrichtung 51 sowie einer Sicherungssteuerung 61 ausgestattet. Des Weiteren ist als Stellmotor 11' ein handelsüblicher Elektromotor vorgesehen und dessen Rotorwelle 14' ist über einen Zahnriementrieb 14" mit dem Gehäuse des ersten Getriebezuges 32, der aus Zahnradstufen besteht, trieblich verbunden.

Die Sicherungseinrichtung 51 besteht hierbei aus einem Sicherungsbolzen 52, der in einem mit dem Eingangsglied 41 des zweiten Getriebezuges verbundenen Zwischenstück 56 eingesetzt ist, einer Feder 53 und einem Elektromagneten 54. Bei Ausfall der Magnetkraft rastet der Sicherungsbolzen 52 durch die Kraft der Feder 53 selbsttätig in eine Ausnehmung 55 ein, die in einem weiteren an der Hohlwelle 21' befestigten Bauteil 57 eingearbeitet ist. Auf diese Weise ist die Spanneinrichtung 1' blockiert, so dass auch bei einem Stromausfall die Spannkraft aufrecht erhalten bleibt.

Mittels der Sicherungssteuerung 61 kann in wählbaren Zeitabständen die Festigkeit einzelner oder aller Bauteile der Spanneinrichtung 1, insbesondere die Bauteile der Getriebezüge 32 und 33, überprüft werden, in dem diese für eine kurze Zeit überbeansprucht werden. Eine stets hohe Betriebssicherheit ist somit gewährleistet.

## Patentansprüche

1. Spanneinrichtung (1) für Werkzeugmaschinen (2), die mit einem kraftbetätigten Spannfutter (3) zur Halterung eines Werkstückes (10) versehen und dessen Spannbacken (4) mittels der Spanneinrichtung (1) über eine axial verstellbare Zugstange (6) betätigbar sind, wobei die Spanneinrichtung (1) einen umschaltbaren Stellmotor (11), einem zwischen diesem und der Zugstange (6) angeordneten Antriebsstrang (31) sowie eine trieblich mit dem Stellmotor (11) gekoppelte, vorzugsweise auf einer mit der Maschinenspindel (5) verbundenen Hohlwelle (21) drehbar gelagerte Glocke (22) aufweist,
**dadurch gekennzeichnet,**
**dass** der Antriebsstrang (31) als zweiteiliger Getriebezug (32, 33) ausgebildet ist, dessen erster Teil (32) in einem Gehäuse (34) angeordnet ist, das fest mit der Rotorwelle (14) des Stellmotors (11) verbunden ist, dass das Eingangsglied (36) und das Ausgangsglied (37) des ersten Getriebezuges (32) über den zweiten Getriebezug (33) an die Glocke (22) bzw. an die Maschinenspindel (5) angeschlossen sind, und dass zur axialen Verstellung der Zugstange (6) mittels des ersten Getriebezuges (32) des Antriebsstranges (31) bei Verdrehungen des Gehäuses (34) Relativdrehungen gegenüber den Eingangsdrehrichtungen zwischen dem Eingangsglied (36) und dem Ausgangsglied (37) erzeugbar sind.

2. Spanneinrichtung nach Anspruch 1,
**dadurch gekennzeichnet,**
**dass** die beiden Getriebezüge (32, 33) des Antriebsstranges (31) wechselseitig als Untersetzungsgetriebe bzw. als Übersetzungsgetriebe ausgelegt sind.

3. Spanneinrichtung nach Anspruch 2,
**dadurch gekennzeichnet,**
**dass** die Übersetzungsstufen (39, 40) der beiden Getriebezüge (32, 33) des Antriebsstranges (31) durch einen Zahnriementrieb, einen Keilriementrieb oder durch Zahnradstufen gebildet sind.

4. Spanneinrichtung nach einem der Ansprüche 1 bis 3,
**dadurch gekennzeichnet,**
**dass** der Stellmotor (11) als Elektromotor, vorzugsweise als Bremsankermotor oder als Hydraulikmotor ausgebildet ist, und dass dessen Stillstandsdrehmoment unmittelbar auf das Gehäuse (34) des 1. Getriebezuges (32) einwirkt.

5. Spanneinrichtung nach einem der Ansprüche 1 bis 4,
**dadurch gekennzeichnet,**
**dass** die Glocke (22) über einen Getriebetrieb (25) oder einen Rollenwälztrieb unmittelbar oder über Zwischenglieder (26) mit der Zugstange (6) gekoppelt ist.

6. Spanneinrichtung nach Anspruch 5,
**dadurch gekennzeichnet,**
**dass** die Glocke (22') über ein Untersetzungsgetriebe (21) mit dem Abtriebsglied (43) des zweiten Getriebezuges (33) trieblich verbunden ist.

7. Spanneinrichtung nach einem der Ansprüche 1 bis 6,
**dadurch gekennzeichnet ,**
**dass** die Spanneinrichtung (1) mit einer Sicherheitseinrichtung (51) versehen ist, mittels der der Antriebsstrang (31) selbsttätig verriegelbar ist.

8. Spanneinrichtung nach Anspruch 7,
**dadurch gekennzeichnet,**
**dass** die Sicherheitseinrichtung (51) aus an einem von zwei relativ zueinander verdrehbaren Bauteilen (21', 55) der Spanneinrichtung (1) angeordnete, entgegen der Kraft einer Feder (53) durch einen Elektromagneten (54) gehaltenen Sicherungsbolzen (52) gebildet ist, der bei Ausfall der Magnetkraft in eine an dem anderen Bauteil (21') vorgesehene Ausnehmung (55) selbsttätig einrastet.

9. Spanneinrichtung nach einem der Ansprüche 1 bis 8,
dass die Spanneinrichtung (1) mit einer Sicherungssteuerung (61) versehen ist, mittels der in zeitlich wählbaren Abständen die Festigkeit einzelner oder aller Bauteile der Spanneinrichtung (1), insbesondere der Getriebezüge, durch kurzzeitige Überlastung überprüfbar ist.

## Claims

1. A clamping device (1) for machine tools (2) that is equipped with a power-operated chuck (3) for holding a workpiece (10), the clamping jaws (4) of which can be actuated using the clamping device (1) by means of an axially moveable draw rod (6), in which the clamping device (1) possesses a servomotor (11) with a changeover function, a driveline (31) located between the servomotor (11) and the draw rod (6) as well as a bell (22) in a rotating mounting that is coupled to the servomotor (11) in a driven connection, preferably on a hollow shaft (21) connected to the machine spindle (5).
**characterised in that,**
the driveline (31) is configured as a two-part gear train (32, 33), the first part (32) of which is arranged in a housing (34) that is permanently connected to the rotor shaft (14) of the servomotor (11), that the input element (36) and the output element (37) of the first gear train (32) are connected to the bell (22) or to the machine spindle (5) by means of the second gear train (33), and that different rotations relative to the input directions of rotation can be generated between the input element (36) and the output element (37) for the purpose of axial adjustment of the draw rod (6) by means of the first gear train (32) of the driveline (31) on rotations of the housing (34).

2. The clamping device in accordance with claim 1,
**characterised in that**
the two gear trains (32, 33) of the driveline (31) are configured alternately as a step-down gear unit and a step-up gear unit.

3. The clamping device in accordance with claim 2,
**characterised in that**
the ratios (39, 40) of the two gear trains (32, 33) in the driveline (31) are formed by a toothed belt drive, a V-belt drive or by gear ratios.

4. The clamping device in accordance with one of Claims 1 to 3, **characterised in that**
the servomotor (11) is configured as an electric motor, preferably as a brake armature motor, or as a hydraulic motor, and that its standstill torque acts directly on the housing (34) of the first gear train (32).

5. The clamping device in accordance with one of Claims 1 to 4, **characterised in that**
the bell (22) is coupled through a gear unit drive (25) or a roller circulating drive with the draw rod (6) directly or via intermediate elements (26).

6. The clamping device in accordance with Claim 5,
**characterised in that**
the bell (22') is in a driven connection with the drive element (43) of the second gear train (33) via a step-down gear unit (21).

7. The clamping device in accordance with one of Claims 1 to 6, **characterised in that**
the clamping device (1) is provided with a safety device (51) by means of which the driveline (31) can be automatically locked.

8. The clamping device in accordance with Claim 7,
**characterised in that**
the safety device (51) is formed from locking pins (52) arranged on one of two components (21', 55) of the clamping device (1) that can be rotated relative to one another and held against the force of a spring (53) by an electromagnet (54), such that if the magnetic power fails the locking pin (52) automatically engages in an opening (55) provided in the other component (21').

9. The clamping device in accordance with one of Claims 1 to 8, **characterised in that**
the clamping device (1) is equipped with a safety control unit (61) by means of which the strength of individual or all components of the clamping device (1), in particular the gear trains, can be tested at selectable time intervals by means of a brief overlord.

## Revendications

1. Dispositif de serrage (1) pour machines-outils (2), équipé d'un mandrin motorisé (3) pour le serrage de la pièce à usiner (10), dont les mors de serrage (4) se laissent actionner à l'aide du dispositif de serrage (1) par l'intermédiaire d'une tige de traction axialement réglable (6), le dispositif de serrage (1) comprenant un servomoteur commutable (11), une chaîne cinématique (31) disposée entre celui-ci et la tige de traction (6), ainsi qu'une cloche (22) raccordé par entraînement avec le servomoteur (11) et logée de préférence en rotation sur un arbre creux (21) raccordé à la broche (5),
**caractérisé en ce que**
la chaîne cinématique (31) est conçue sous la forme d'une transmission divisée (32, 33) dont la première partie (32) se trouve dans un carter (34) lié rigidement à l'arbre du rotor (14) du servomoteur (11), que l'élément d'entrée (36) et l'élément de sortie (37) de la première transmission (32) sont raccordés par l'intermédiaire de la deuxième transmission (33) à la cloche (22) ou à la broche (5) et que pour le déplacement axial de la tige de traction (6) par la première transmission (32) de la chaîne cinématique (31), il est possible, aux rotations du carter (34), de réaliser des rotations relatives par rapport aux sens de rotation d'entrée entre l'élément d'entrée (36) et l'élément de sortie (37).

2. Dispositif de serrage d'après la revendication 1,
**caractérisé en ce que**
les deux transmissions (32, 33) de la chaîne cinématique (31) sont conçues alternativement en tant que transmission à démultiplication ou en tant que transmission à surmultiplication.

3. Dispositif de serrage d'après la revendication 2,
**caractérisé en ce que**
les étages de transmission (39, 40) des deux transmissions (32, 33) de la chaîne cinématique (31) sont formés par une transmission à crémaillère, une transmission à courroie trapézoïdale ou par des étages à roues dentées.

4. Dispositif de serrage d'après une des revendications 1 à 3,
**caractérisé en ce que**
le servomoteur (11) est conçu sous la forme d'un moteur électrique, de préférence un moteur à armature de freinage ou un moteur hydraulique, et que son couple d'inertie agit directement sur le carter (34) de la première transmission (32).

5. Dispositif de serrage d'après une des revendications 1 à 4,
**caractérisé en ce que**
la cloche (22) est raccordée par l'intermédiaire d'une transmissions à engrenages (25) ou d'une transmission à rouleaux soit directement soit par l'intermédiaire d'éléments intermédiaires (26) avec la tige de traction (6).

6. Dispositif de serrage d'après la revendication 5,
**caractérisé en ce que**
par l'intermédiaire d'une transmission à démultiplication (21), la cloche (22') est raccordée par entraînement avec l'élément de sortie (43) de la deuxième transmission (33).

7. Dispositif de serrage d'après une des revendications 1 à 6,
**caractérisé en ce que**
le dispositif de serrage (1) est équipé d'un dispositif de sécurité (51) permettant de verrouiller automatiquement la chaîne cinématique (31).

8. Dispositif de serrage d'après la revendication 7,
**caractérisé en ce que**
le dispositif de sécurité (51) consiste d'un boulon de sécurité (52) disposé sur un de deux composants (21', 55) de l'équipement de serrage (1), décrivant une rotation relative l'un par rapport à l'autre, le boulon étant retenu par un solénoïde (54) contre la force d'un ressort (53), et qui, en cas de disparition de la force du solénoïde, s'engrène automatiquement dans un évidement (55) prévu dans l'autre composant (21').

9. Dispositif de serrage d'après une des revendications 1 à 8,
**caractérisé en ce que**
le dispositif de serrage (1) est équipé d'une commande de sécurité (61) qui permet de vérifier à intervalles réglables par une courte surcharge la rigidité de certains ou de tous les composants du dispositif de serrage (1), en particulier des transmissions.
